# EUROPÄISCHE PATENTSCHRIFT

(11) **EP 0 806 311 B1**
(45) Veröffentlichungstag und Bekanntmachung des Hinweises auf die Patenterteilung: **12.06.2002**
(21) Anmeldenummer: 97104355.9
(22) Anmeldetag: 14.03.1997
(51) Int. Cl.: B60G 21/05, B60G 9/00

(54) **Aufhängung für eine Fahrzeugachse**
Suspension of a vehicle axle
Suspension d'un essieu de véhicule

(30) Priorität: 06.05.1996 DE 19617929
(43) Veröffentlichungstag der Anmeldung: 12.11.1997
(73) Patentinhaber: Otto Sauer Achsenfabrik Keilberg, 63856 Bessenbach-Keilberg (DE)
(72) Erfinder: Frey, Christopher, Dr.-Ing., 63865 Bessenbach (DE)
(74) Vertreter: KEIL & SCHAAFHAUSEN

(56) Entgegenhaltungen:
- EP-A- 0 600 198
- DE-C- 4 232 779
- US-A- 1 965 267
- SETTMEIER D ET AL: "A NEW CONCEPT FOR INDEPENDENT WHEEL REAR AXLE WITH TWISTED TUBULAR CROSSBAR FITTED ON OUR PSA/FIAT MONOSPACE LA NOUVELLE CONCEPTION D'ESSIEU ARRIERE TUBULAIRE, A ROUES INDEPENDANTES, APPLIQUEE AU MONOSPACE PSA/FIAT" INGENIEURS DE L'AUTOMOBILE, Nr. 699, 1. August 1995, Seiten 71-74, XP000525390 paris

## Beschreibung

Die Erfindung betrifft eine Aufhängung für eine einen starren rohrförmigen Achskörper aufweisende Fahrzeugachse nach dem Oberbegriff des Anspruchs 1.

Aus der US-A-1 965 267 ist eine Fahrzeugachse bekannt, welche einen Sitz zur Auflage einer Feder aufweist. Der Sitz verfügt im Vergleich mit den übrigen Abschnitten der Achse über einen vergrößerten Außendurchmesser, eine vergrößerte Wandstärke, und eine abgeflachte Auflagefläche für die Feder. Der Innendurchmesser der Achse ist konstant.

Eine Achsaufhängung der eingangs genannten Art ist aus der EP-A-0 600 198 bekannt. Als Mittel zum Verstärken des Achskörpers wird eine zweiteilige Hülse verwendet, welche einerseits mit dem Achskörper und andererseits mit dem Tragarm verschweißt wird, welcher eine Öffnung für die Aufnahme des Achskörpers mit der darauf angeordneten Verstärkungshülse aufweist. Die zweiteilige Hülse hat einander gegenüberliegende Öffnungen, über welche die Hülsenteile mit dem Achskörper verschweißt werden. Durch die über die Lochschweißungen auf das Achsrohr aufgeschweißte Hülse ergibt sich zwischen beiden Teilen ein Spalt, in dem durch Eindringen von Feuchtigkeit Korrosionsgefahr besteht. Dieser Spalt muss daher aufwendig dauerelastisch an beiden Hülsenenden zuverlässig abgedichtet werden. Dennoch wird durch diese Maßnahme die zwischen beiden Teilen auftretende Reibkorrosion, hervorgerufen durch Betriebsbeanspruchungen, nicht verhindert. Der Achskörper hat bei der bekannten Aufhängung über seine gesamte Länge eine einheitliche Wandstärke. Die bekannte Achsanordnung erfordert einen hohen Montageaufwand, den zu verringern das Hauptziel der vorliegenden Erfindung ist, ohne eine Deformation des Achskörpers oder Korrosion in Kauf zu nehmen.

Diese Aufgabe wird bei einer Achsaufhängung der eingangs genannten Art entsprechend der Erfindung mit den Merkmalen des Anspruchs 1 gelöst. Die vergrößerte Wandstärke wird dadurch erreicht, daß der Außendurchmesser des Achskörpers über seine Länge im wesentlichen konstant ist, der verstärkte Wandbereich also von der Achskörperwandung nach radial innen vorspringt.

Derartige Achsrohre lassen sich verhältnismäßig einfach mit entsprechenden Stauch- und Schmiedevorrichtungen herstellen. Die Montage zusätzlicher Verstärkungsteile, wie sie im Stande der Technik erforderlich ist, entfällt vollständig. Vielmehr wird eine Einschnürung des Achskörpers durch erhöhte Wandstärke gerade dort vermieden, wo der Achskörper an bzw. in die Tragarme eingespannt bzw. eingeschweißt wird. Die Erfindung bringt ferner den wesentlichen Vorteil mit sich, daß eine Gewichtsoptimierung des Achskörpers erfolgen kann. Bisher war eine größere Wandstärke des Achskörpers zu verwenden als sie für die Bewältigung der Biegemomente erforderlich war, nur um im Einspannbereich eine Deformation zu vermeiden. Mit der Erfindung kann dem Achskörper über praktisch seine gesamte Länge eine geringere Wandstärke als bisher gegeben werden, während lediglich im Bereich der Einspannung bzw. Einschweißung eine größere Wandstärke vorgesehen ist.

Dabei bildet die vergrößerte Wandstärke vorzugsweise unter jeder der beiden Achseinspannungen einen Ringbereich oder zwei Ringbereiche am Achskörper.

Die Innendurchmesser der Bereiche vergrößerter Wandstärke sind vorzugsweise kleiner als der Innendurchmesser des übrigen Achskörpers.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung.

Es zeigen:
- Fig. 1: eine schematische Seitenansicht einer die Erfindung aufweisenden Fahrzeugachsaufhängung im Bereich einer Seite einer (im Vertikalschnitt zu sehenden) Fahrzeugachse, wobei die Anordnung am gegenüberliegenden Ende des Achskörpers vorzugsweise entsprechend ausgebildet ist, und
- Fig. 2: die Fahrzeugachsaufhängung von Fig. 1 im Bereich des einen Endes des Achskörpers in Draufsicht.

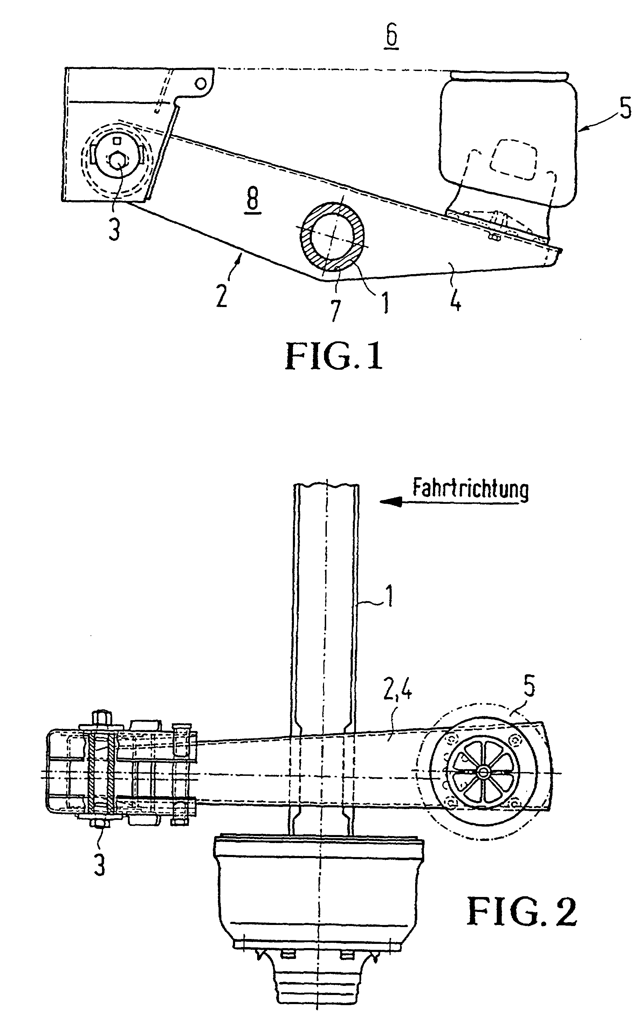

Bei dem in den Fig. 1 und 2 dargestellten Ausführungsbeispiel der Erfindung weist die Fahrzeugachsaufhängung für einen starren rohrförmigen Achskörper je wenigstens einen Tragarm 2 beidseits der Fahrzeuglängsmittelebene auf. Der jeweilige Tragarm 2 ist mit seinem vorderen Ende an einem chassisfesten Lagerpunkt 3 angelenkt und im Abstand dahinter starr mit dem Achskörper 1 verbunden. Dargestellt ist eine Version, bei welcher der Achskörper 1 mit dem Tragarm 2 verschweißt ist, indem der Achskörper 1 in Öffnungen 7 von Seitenwangen 8 der Tragarme 2 aufgenommen ist. Der Achskörper 1 kann jedoch auch, z.B. mittels U-Bügel, an den Tragarmen 2 oder über Achslappen an Führungslenkern festgespannt sein. Ein von dem Achskörper 1 aus jeweils nach hinten ragender Tragarmabschnitt 4 bildet das untere Lager einer Luftfeder 5, auf deren Oberseite sich das Chassis 6 abstützt.

Der Achskörper 1 wird von einem Achsrohr gebildet, dessen Wandstärke im Bereich der Verbindung mit dem Tragarm 2 vergrößert ist. In den dargestellten Fällen bildet die vergrößerte Wandstärke zusammenhängende Ringbereiche des Achskörpers 1.

Eine vergrößerte Wandstärke des rohrförmigen Achskörpers 1 im Bereich der Verbindung mit dem Tragarm 2 ist in dem in Fig. 2 dargestellten Fall dadurch erreicht, daß der Achskörper 1 über seine gesamte Länge einen im wesentlichen gleichbleibenden Außendurchmesser aufweist, während der Innendurchmesser im Bereich der Verbindung mit dem Tragarm 2 zur Schaffung einer radial nach innen vorspringenden größeren Wandstärke führt.

### Bezugszeichenliste

- 1: Achskörper
- 2: Tragarm
- 3: Lagerpunkt
- 4: Tragarmabschnitt
- 5: Luftfeder
- 6: Chassis
- 7: Öffnungen
- 8: Seitenwangen

## Patentansprüche

1. Aufhängung für eine einen starren rohrförmigen Achskörper (1) aufweisende Fahrzeugachse, mit wenigstens je einem Tragarm (2) oder einem Führungslenker beidseits der Fahrzeuglängsmittelebene, welcher mit seinem vorderen Ende an einem chassisfesten Lagerpunkt (3) angelenkt und im Abstand davon starr mit dem Achskörper (1) verbunden, z.B. verschweißt oder verspannt, ist, und mit Mitteln zum Verstärken des Achskorpers (1) im Bereich der Verbindung mit dem Tragarm (2) oder mit dem Führungslenker, wobei ein von dem Achskörper (1) aus jeweils nach hinten ragender Tragarmabschnitt (4) oder Führungslenkerabschnitt das untere Lager einer Luftfeder (5) bildet, auf deren Oberseite sich das Chassis (6) abstützt, **dadurch gekennzeichnet, daß** als Achskörper (1) ein Achsrohr dient, dessen Wandstärke im Bereich der Verbindung mit dem Tragarm (2) oder mit Führungslenkern vergrößert und dass der Außendurchmesser des Achskörpers (1) über seine Länge im Wesentlichen konstant ist.

2. Aufhängung nach Anspruch 1, **dadurch gekennzeichnet, daß** die vergrößerte Wandstärke unter jeder der Achseinspannungen wenigstens einen Ringbereich des Achskörpers (1) ausmacht.

3. Aufhängung nach Anspruch 1 oder 2, **dadurch gekennzeichnet, daß** die Innendurchmesser der Bereiche vergrößerter Wandstärke kleiner als der Innendurchmesser des übrigen Achskörpers (1) sind.

## Claims

1. Suspension for a vehicle axis comprising a rigid tubular axle shaft (1), having at least one bearing arm (2) or guide rod on both sides of the plane in longitudinal direction of the vehicle, which is hinged at a bearing point (3) fixed to the chassis with its front end and which is rigidly connected, e.g. welded or braced with the axle shaft (1) at a distance therefrom, and means for strenghtening the axle shaft (1) in the region of the connection with the bearing arm (2) or the guide rod, wherein a support arm section (4) or guide rod section extending backward from the axle shaft (1) forms the lower bearing of an air spring (5), on the surface of which the chassis (6) supports, **characterized in that** an axle tube serves as the axle shaft (1), the wall thickness of which being enlarged in the region of the connection with the support arm (2) or guide bars and that the outer diameter of the axle shaft (1) being essentially constant about its length.

2. Suspension according to claim 1, **characterized in that** the enlarged wall thickness under each of the axle clampings is at least one ring region of the axle shaft (1).

3. Suspension according to claims 1 or 2, **characterized in that** the inner diameter of the regions of enlarged wall thickness is smaller than the inner diameter if the remaining axle shaft (1).

## Revendications

1. Suspension pour un essieu de véhicule présentant un corps d'axe (1) rigide tubulaire, avec de chaque côté du plan médian longitudinal du véhicule au moins un bras porteur (2) ou un levier de guidage qui est articulé par son extrémité antérieure sur un point de palier (3) fixé au châssis et qui est relié à quelque distance de là au corps de l'axe (1) de façon rigide, par exemple par soudage ou par précontrainte, et avec des moyens pour renforcer l'axe (1) au niveau de la liaison avec le bras porteur (2) ou le levier de guidage, une section (4) du bras porteur ou du levier de guidage qui s'étend depuis l'axe (1) vers l'arrière formant le support inférieur d'une suspension pneumatique sur la face supérieure de laquelle s'appuie le châssis, **caractérisée en ce qu'**un tube d'axe joue le rôle de corps d'axe (1) dont l'épaisseur des parois au niveau de la liaison avec le bras porteur (2) ou avec le levier de guidage est augmentée, et **en ce que** le diamètre externe du corps de l'axe (1) est essentiellement constant sur toute sa longueur.

2. Suspension selon la revendication 1, **caractérisée en ce que** l'épaisseur de la paroi augmentée sous chaque encastrement de l'axe forme au moins une zone annulaire du corps de l'axe (1).

3. Suspension selon la revendication 1 ou 2, **caractérisée en ce que** les diamètres intérieurs des zones de paroi épaissie sont inférieurs au diamètre intérieur du reste du corps de l'axe (1).
